Europäisches Patentamt

European Patent Office

Office européen des brevets

(19)

(11) Numéro de publication: **0 285 519**
**B1**

(12) **FASCICULE DE BREVET EUROPEEN**

(45) Date de publication du fascicule du brevet: **16.01.91**

(51) Int. Cl.⁵: **G 01 V 11/00, G 01 V 13/00**

(21) Numéro de dépôt: **88400784.0**

(22) Date de dépôt: **31.03.88**

(54) **Dispositif pour l'acquisition de données sismiques dans un forage et leur transmission à un système central de commande et d'enregistrement.**

(30) Priorité: **02.04.87 FR 8704677**

(43) Date de publication de la demande:
**05.10.88 Bulletin 88/40**

(45) Mention de la délivrance du brevet:
**16.01.91 Bulletin 91/03**

(84) Etats contractants désignés:
**DE GB IT NL**

(56) Documents cités:
**EP-A-0 203 227**
**FR-A-2 282 684**
**GB-A-2 005 865**
**US-A-3 044 175**
**US-A-3 237 093**
**US-A-3 725 857**
**US-A-4 041 442**

(73) Titulaire: **INSTITUT FRANCAIS DU PETROLE**
**4, Avenue de Bois-Préau**
**F-92502 Rueil-Malmaison (FR)**

(72) Inventeur: **Crétin, Jacques**
**9, avenue des Villars Parly 2**
**F-78150 Le Chesnay (FR)**
Inventeur: **Thérond, Jean-François**
**1, rue Théophile Gauthier**
**F-92200 Neuilly s/Seine (FR)**
Inventeur: **Saussier, Daniel**
**15, rue Ch. Elisabetville Epone**
**F-78410 Aubergenville (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

L'invention a pour objet un système pour l'acquisition de données mesurées dans un puits ou forage et notamment de données sismiques.

L'acquisition de données de mesure dans un forage est réalisée en général en descendant dans celui-ci une ou plusieurs sondes suspendues à un câble multi-fonctions. La sonde comporte un corps allongé et un ou plusieurs bras mobiles.

Des vérins hydrauliques permettent de déplacer chaque bras d'une position de repos contre le corps de la sonde à une position d'ouverture où ils viennent s'ancrer contre la paroi du forage et ainsi immobiliser la sonde. Des circuits hydrauliques relient les vérins à des moyens pour délivrer du fluide sous pression comportant généralement un moteur èlectrique et des électrovannes.

Le câble multi-fonctions comporte le plus souvent une pluralité de lignes conductrices permettant la transmission de courants électriques pour l'alimentation du moteur et de signaux de toute nature. Il s'agit par exemple de signaux de commande transmis à la sonde depuis un laboratoire de surface et de signaux de réponse envoyés depuis la sonde. Les signaux de réponse sont constitués, soit de signaux de contrôle ou de test, soit de données mesurées par les capteurs de la sonde. Une telle sonde est décrite par exemple dans le brevet français FR-2.501.380.

On peut utiliser aussi par exemple une sonde pourvue de bras d'ancrage actionnès par des ressorts maintenus sous tension par des verrous durant la descente. Des moyens hydrauliques comportant des électrovannes sont utilisés pour le déverrouillage et l'ouverture des bras.

Les électro-vannes sont actionnées par des signaux de commande reçus par l'intermédiaire du câble multi-fonctions. Une telle sonde est décrite par exemple dans le brevet français FR-2.548.727.

Les différents capteurs descendus dans le puits pour effectuer des mesures de différente nature peuvent être inclus dans une sonde unique ou bien encore dans un ensemble de sondes comportant une sonde principale sous laquelle sont suspendues à des profondeurs différentes une pluralité de sondes satellites. Un tel ensemble de sondes est décrit par exemple dans le brevet français FR-2.564.599.

Des opérations de prospection sismique sont réalisées par exemple en disposant dans des puits une pluralité de capteurs adaptés à détecter des ondes renvoyées par les discontinuités du sous-sol, provenant d'une source sismique disposée en surface ou à son voisinage ou bien dans un autre puits. On exploite les signaux reçus de manière à obtenir des coupes sismiques du sous-sol.

Les capteurs sismiques sont généralement directifs et orientés suivant une ou plusieurs directions orthogonales les unes par rapport aux autres. Ils sont disposés dans un ensemble de plusieurs sondes de manière à capter les signaux sismiques reçus à des niveaux de profondeurs différents et sont reliés à un laboratoire de surface, soit directement par une ligne particulière incluse dans le câble multi-fonctions, soit par l'intermédiaire d'un appareil d'acquisition sismique.

Dans ce dernier cas, les différents signaux sont collectés, échantillonnés, numérisés et transmis par une ou plusieurs lignes du câble multi-fonctions sous une forme codée. Après décodage, ils sont enregistrés et traités par un laboratoire sismique.

La multiplication des capteurs et des sondes nécessaires pour les besoins de la prospection sismique dans les forages, rendent toujours plus complexes et délicates les opérations de descente, de mise en place et de contrôle du bon fonctionnement de l'appareillage. Ceci est d'autant plus vrai que l'on opère à des profondeurs importantes dans des conditions de température et de pression plus sévères.

Un procédé classique pour surveiller la descente d'une sonde unique dans un puits consiste à contrôler la tension du câble de support. Un arrêt de la progression provoque des discontinuités de tension facilement décelables. Lorsque l'on utilise un dispositif de rèception comportant plusieurs sondes, ce procédé de détection n'est pratiquement plus possible car les variations de la tension provoquée par un arrêt de la seule sonde satellite en tête de la progression sont beaucoup plus faibles. En cas de détection tardive, on risque un encombrement du forage difficile à résoudre.

Le dispositif selon l'invention permet l'acquisition de données sismiques dans un forage et leur transmission à un système central d'enregistrement et de commande disposé à l'extérieur du forage tout en offrant la possibilité d'exercer des contrôles et des tests sur l'équipement de réception et d'acquisition.

Il comporte un ensemble de réception pourvu d'une pluralité de capteurs sismiques disposés dans au moins une sonde descendue dans le forage à l'extrémité d'un câble à plusieurs lignes de transmission, ladite sonde comportant des bras d'ancrage associés à des moyens de pression hydrauliques commandés depuis le système central, et un appareil d'acquisition adapté à collecter les signaux reçus par les différents capteurs et à les transmettre au système central sous la forme de séries d'échantillons de signaux multiplexés et numérisés, par des lignes de transmission dudit câble.

Comme decrit dans la partie caractèrisante de la revendication 1.

L'ensemble de contrôle comporte par exemple des moyens pour déterminer la position des bras d'ancrage.

Il peut comporter aussi des moyens pour tester les différents capteurs et l'appareil d'acquisition avant la réalisation de cycles d'acquisition de données sismiques.

Les moyens pour surveiller la progression de l'ensemble de réception le long du forage comportent par exemple un comparateur de niveau (ou d'ènergie) pour la détection des signaux reçus par le système central et provenant desdits capteurs, dont l'amplitude devient inférieure à une valeur-seuil prédéterminée.

L'ensemble de contrôle inclus dans le dispositif selon l'invention, permet de surveiller l'ensemble de réception durant son déplacement le long du forage, de vérifier son bon ancrage, et de procéder à de nombreuses mesures in-situ pour tester son fonctionnement avant d'effectuer des cycles d'acquisition de données ou au cours de ces cycles.

De ce fait, l'obtention et l'interprétation des enregistrements sismiques dans les puits s'en trouvent facilitées.

D'autres caractéristiques et avantages du dispositif selon l'invention apparaîtront à la lecture de la description de modes de réalisation donnés à titre d'exemples non limitatifs, en se référant aux dessins annexés où:

la figure 1 montre un ensemble de réception multi-sondes dans un puits,

la figure 2 montre plus en détail la sonde principale,

la figure 3 montre schématiquement la section d'un câble électro-porteur reliant l'ensemble de réception à la surface,

la figure 4 montre un schéma synoptique de l'appareil d'acquisition et de l'ensemble de contrôle disposés dans la sonde principale,

la figure 5 montre schématiquement un détecteur d'ouverture des bras d'ancrage,

la figure 6 représente schématiquement un ensemble d'interface disposé dans la sonde principale,

la figure 7 montre schématiquement un élément de test des capteurs et des voies sismiques,

la figure 8 représente des chronogrammes de signaux appliqués aux éléments de test,

la figure 9 montre la répartition en fonction du temps des signaux reçus par le système central en réponse aux tests effectués sur les capteurs et les voies sismiques,

la figure 10 représente schématiquement un bloc d'alimentation électrique,

la figure 11 montre un schéma synoptique général du système de commande et d'enregistrement,

la figure 12 montre une unité de commande incluse dans le système de commande et d'enregistrement,

la figure 13 montre une unité de traitement incluse dans le même système, et

la figure 14 représente un schéma synoptique de l'unité de traitement.

La prospection sismique du sous-sol peut être réalisée en descendant dans un forage à l'extrémité d'un câble électro-porteur multi-fonctions 2, une sonde unique ou plus généralement un ensemble de sondes.

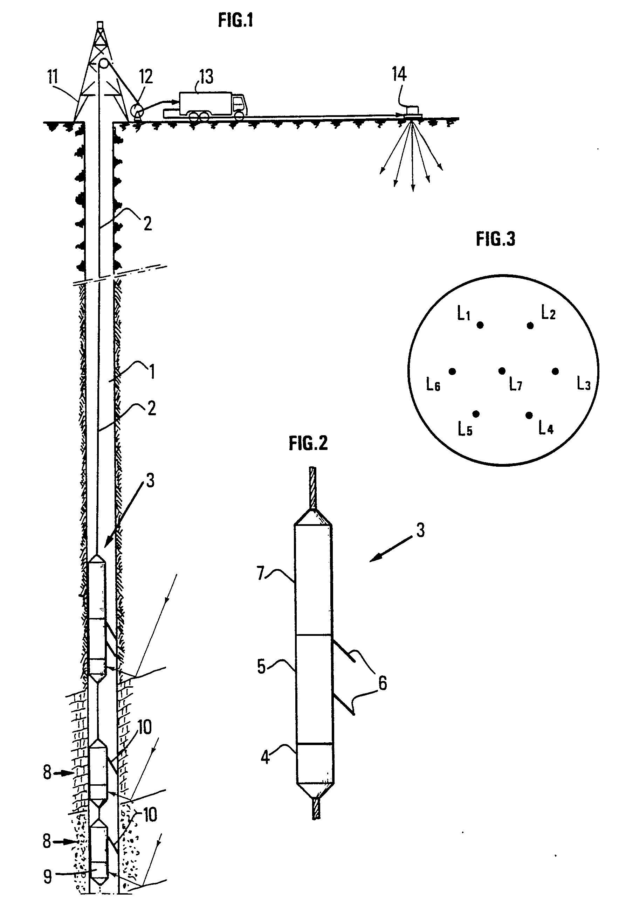

En tête, est disposée une sonde principale 3 du type décrit par exemple dans le brevet français précité FR-2.501.380, qui comporte (Fig. 2) un corps à plusieurs compartiments. Dans un compartiment inférieur 4 sont logés un ou plusieurs capteurs sismiques. Il peut s'agir par exemple de géophones directionnels associés par trois de manière à capter des ondes polarisées suivant trois directions orthogonales (géophones triaxiaux).

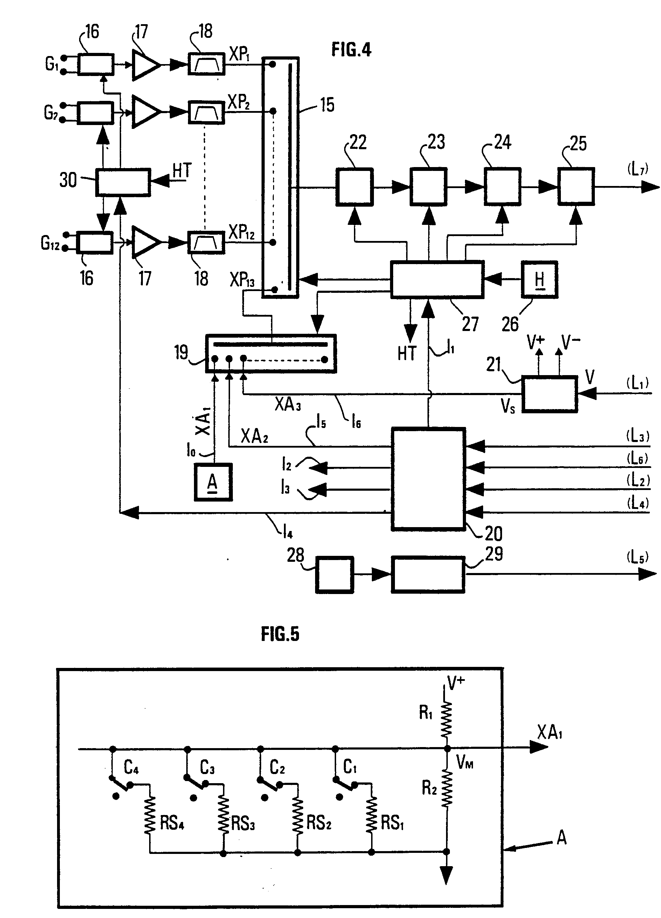

Dans un compartiment médian 5 est disposé un ensemble hydraulique alimentant des vérins de commande de deux bras mobiles 6 déplaçables entre une position de repli contre le corps et une position ouverte où ils viennent s'ancrer dans la paroi du forage et plaquer le corps de la sonde contre la paroi diamétralement opposée. Dans un compartiment supérieur 7 est disposé un appareil électronique d'acquisition de données qui sera décrit en relation avec la figure 4.

Sous la sonde principale sont suspendues une ou plusieurs sondes satellites 8 comportant à leur partie inférieure, un compartiment 9 pour un ou plusieurs capteurs sismiques. Dans la partie supérieure est disposé un mécanisme de commande (non représenté) permettant de déclencher l'ouverture d'un bras mobile 10, ce qui permet d'ancrer la sonde satellite contre la paroi du puits.

Ce mécanisme comporte par exemple un ressort et un verrou que l'on peut télécommander. Une telle sonde satellite est décrite par exemple dans les brevets français précités FR-2.548.727 ou 2.564.599.

Le câble multi-fonctions 2 relie la sonde ou le train de sondes à une installation de surface comportant une structure de support 11 pourvue d'un touret de manoeuvre 12 associé à des moyens moteurs (non représentés).

Le câble multi-fonctions 2 est d'un type courant et comporte (Fig. 3) sept lignes conductrices $(L_1 \ldots L_7)$ et une gaine métallique extérieure. Par le câble, on transmet du courant électrique pour faire fonctionner un moteur assurant la mise en pression d'un liquide hydraulique nècessaire à la manoeuvre des vérins et des courants intermittents pour l'ouverture ou la fermeture d'électrovannes de commande. D'autres lignes du câble 2 sont utilisées pour transmettre des signaux de commande et des données, comme on le verra ci-après.

Le câble 2 est connecté à un véhicule 13 contenant un système central de commande et d'enregistrement. Une source sismique 14 est disposée en surface et sur commande du système central, émet des ondes sismiques qui sont transmises dans le sol. Les divers signaux reçus par les différents capteurs descendus dans le puits, sont collectés par l'appareil d'acquisition de données disposé dans la sonde principale 3 et transmis au système central.

L'appareil d'acquisition de données schématisé à la figure 4 comporte un multiplexeur principal 15 pourvu de douze entrées référencées respectivement XP1 à XP12 sur lesquelles sont appliqués des signaux sismiques ou des signaux de test.

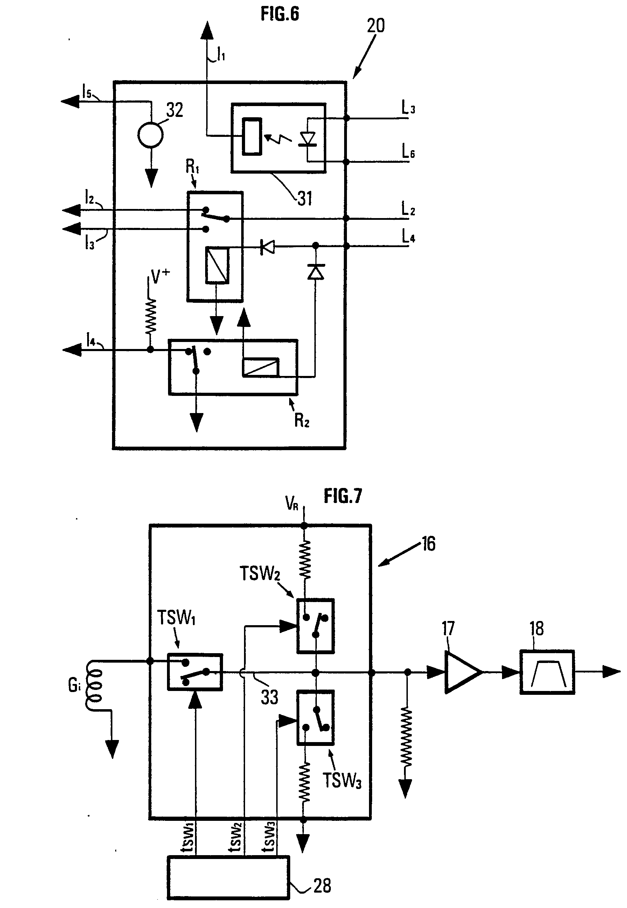

Ces signaux sont produits par douze circuits identiques connectés respectivement à des capteurs sismiques $G_1$ à $G_{12}$. Chacun d'eux comporte un élément de test 16 (représenté plus en détail à la figure 7) dont l'entrée est connectée à un capteur sismique $G_1$ . . . $G_{12}$ et dont la sortie est connectée à un préamplificateur à gain fixe 17. Les signaux amplifiés sont appliqués respectivement à des ensembles de filtrage passe-bande 18 centrés sur la bande de fréquence des signaux sismiques.

Les sorties des ensembles de filtrage 17 sont appliquées aux entrées XP1 à XP12 du multiplexeur principal 15.

Une entrée supplémentaire XP13 de celui-ci est connectée à la sortie d'un multiplexeur auxiliaire 19 à huit voies. Aux entrées du multiplexeur auxiliaire 19, sont appliqués des signaux à variation relativement lente.

Sur l'une d'elles XA1, par une ligne $l_0$, est appliquée par exemple une tension électrique représentative de l'état des bras d'ancrage des sondes satellites. Cette tension est délivrée par un diviseur potentiométrique variable (Fig. 5) constitué d'une première résistance fixe $R_1$, et d'une résistance variable constituée d'une résistance fixe $R_2$ mise en parallèle avec une résistance supplémentaire RS1, RS2, RS3 ou RS4 par le basculement de commutateurs $C_1$, $C_2$, $C_3$, $C_4$.

La commutation mettant en parallèle une nouvelle résistance est obtenue par l'ouverture du (ou des) bras d'ancrage des trois satellites.

Le diviseur potentiométrique étant connecté entre une tension d'alimentation $V_+$ et la masse, la tension électrique en son point milieu $V_M$ est représentative du nombre de bras d'ancrage ouverts et donc permet de savoir si l'ensemble des sondes est convenablement immobilisé dans le sondage avant toute opération d'acquisition.

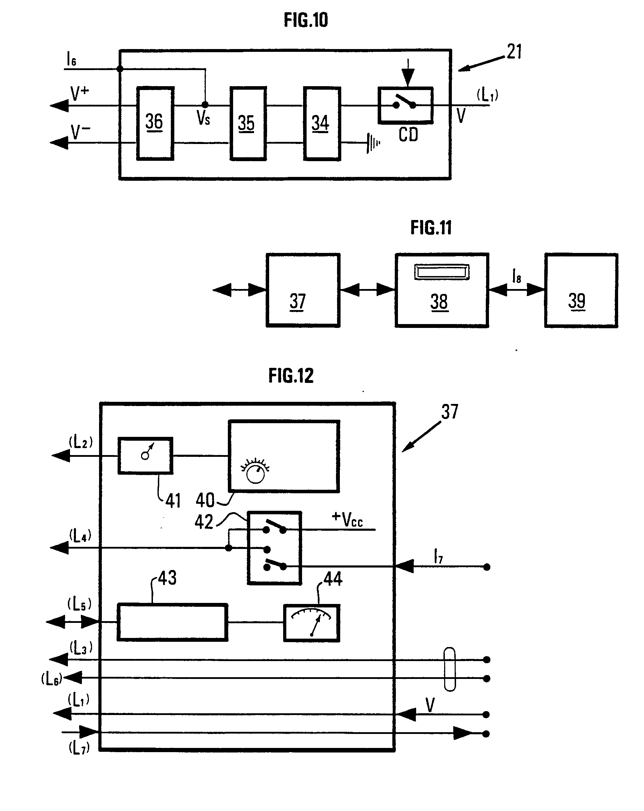

Sur deux autres entrées XA2, XA3 du multiplexeur auxiliaire 19, et par deux lignes $l_5$ et $l_6$ respectivement, sont appliqués des signaux traduisant une température de fonctionnement délivrée par un capteur disposé dans un ensemble d'interface 20 (Fig. 4) et une tension électrique délivrée par un bloc d'alimentation électrique 21, ces signaux et cette tension électrique permettant d'optimiser le fonctionnement de l'alimentation, comme on le verra plus en détail en relation avec les figures 6 et 10.

La sortie du multiplexeur principal 15 est connectée à une chaîne d'acquisition comportant un amplificateur à gain variable 22 du type décrit par exemple dans les demandes de brevet français publiées no 2 593 004 ou 2 592 537.

Les signaux amplifiés sont échantillonnés et numérisés dans un convertisseur analogique-numérique 23. Les échantillons numérisés sont ensuite codés par un circuit spécialisé 24 suivant un code bipolaire tel que le code HDB3 bien connu des spécialistes des transmissions, avant d'être appliqués à un élément d'émission 25. La sortie de cet élément est connectée à la ligne $L_7$ du câble multi-fonctions 2.

Un signal d'horloge H produit par un oscillateur 26, est appliqué à un ensemble logique de synchronisation 27 produisant des séquences de signaux pour la commande des deux multiplexeurs 15 et 19 et de la chaîne d'acquisition 22 à 25.

Des capteurs 28 sont disposés dans la sonde principale pour la mesure de la pression dans les circuits hydrauliques. Les signaux qu'ils engendrent sont appliqués à un module électronique d'interface 29 et transmis en permanence sur une ligne $L_5$ du câble de transmission.

Un synchronisateur de test 30 dont la fonction sera précisée en relation avec la figure 7, est utilisé pour commander en séquence des tests sur les douze voies sismiques multiplexées, à partir d'un signal HT engendré par l'ensemble logique de synchronisation 27.

Le bloc d'alimentation 21 est connecté à une ligne d'alimentation $L_1$ du câble de transmission. Les lignes $L_2$, $L_3$, $L_4$ et $L_6$ de ce même câble sont appliqués à l'ensemble d'interface 20.

L'ensemble d'interface 20 comporte (Fig. 6) un coupleur opto-électronique 31 connecté aux lignes $L_3$ et $L_6$ du câble et recevant par celles-ci un signal de synchronisation permettant la synchronisation du multiplexeur et de la chaine d'acquisition et qui définit une "fenêtre" de temps au cours de laquelle on effectue l'acquisition de signaux.

Le signal issu du coupleur 31 est appliqué par une ligne $l_1$ à l'ensemble logique 27 (Fig. 4). La ligne $L_2$ transporte un courant d'alimentation. Un premier relais $R_1$ permet de l'appliquer soit au moteur de la sonde principale par une ligne $l_2$, soit aux électrovannes des sondes satellites par une ligne $l_3$.

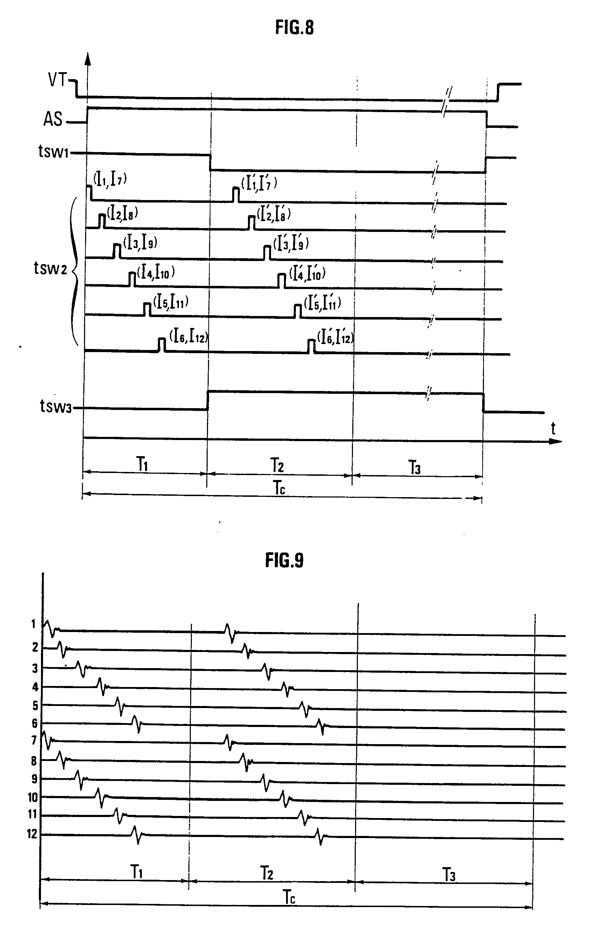

Un second relais $R_2$ permet d'appliquer par intermittence une tension nulle à une ligne $l_4$ connectée à une entrée de commande du synchronisateur 30 (Fig. 4), les instants de discontinuités de la tension délimitant une fenêtre de validation de test VT (Fig. 8).

Un capteur de température 32 est disposé dans l'ensemble d'interface 20. Les signaux qu'il produit, sont appliqués par une ligne $l_5$ à l'entrée XA2 du multiplexeur auxiliaire 19.

Le déclenchement du premier relais $R_1$ et du second relais $R_2$ est commandé par une ligne unique $L_4$ sur laquelle est appliquée soit une tension positive, soit une tension négative, soit une tension nulle.

L'ensemble de test constitué du synchronisateur 30 et des éléments 16 (Fig. 4), permet de tester en séquence le bon fonctionnement des capteurs $G_1$ à $G_{12}$ et des voies sismiques associées. Chacun des éléments de test 16 comporte (Fig. 7) un circuit 33 connecté en permanence à l'entrée d'un des préamplificateurs 17 et, par l'intermédiaire d'un interrupteur électronique TSW1, avec un transducteur $G_i$ (i = 1 à 12). Deux autres interrupteurs de même type TSW2 et TSW3 connectent respectivement le circuit 33 à une tension de référence $V_R$ et avec la masse, par l'intermédiaire de résistances.

Les trois interrupteurs d'un même élément 16 sont actionnés par des signaux de commande tsw1, tsw2, tsw3 issus du synchronisateur 30. Ces signaux sont engendrés à partir de signaux d'horloge HT engendrés par l'ensemble logique de synchronisation 27.

Chaque séquence de test est délimitée par le signal VT de durée $T_c$ (Fig. 8) reçu au synchronisateur par la ligne $I_4$ (Fig. 4). Cette séquence comporte un premier test des différents capteurs $G_1$ à $G_{12}$ répartis en deux groupes.

Un premier groupe comporte les capteurs $G_1$ à $G_6$, un second les capteurs $G_7$ à $G_{12}$. Un signal tsw1 est appliqué simultanément à tous les interrupteurs TSW1 de manière à connecter les capteurs $G_1$ à $G_{12}$ à l'entrée de leurs préamplificateurs respectifs 17. Cette connexion est permanente en dehors des périodes de test.

Les interrupteurs TSW3 restant ouverts (tsw3 est au niveau bas), on ferme alors une première fois en séquence et deux par deux les interrupteurs TSW2 durant un bref instant de manière à appliquer aux capteurs $G_1$ à $G_{12}$ respectivement des impulsions de courant $I_1$ à $I_{12}$.

Les impulsions $I_1$ et $I_7$ sont simultanées, de même que les impulsions $I_2$ et $I_8$ ou $I_3$ et $I_9$ etc.

Les signaux de réponse $V_1$, $V_2$ ... $V_{12}$ des différents capteurs (Fig. 9) sont transmis deux à deux au multiplexeur principal 15, appliqués à la chaîne d'acquisition 22 à 25 et transmis au système de commande et d'enregistrement en surface par la ligne $L_7$ (Fig. 4). L'opérateur peut donc détecter d'éventuelles causes de pannes.

A l'issue du premier intervalle de temps $T_1$ le signal tsw1 est mis au niveau logique bas, le signal tsw3 au niveau logique haut de manière à déconnecter les différents capteurs $G_1$ à $G_{12}$ de leurs voies sismiques associées et à connecter une résistance déterminée en parallèle sur l'entrée des préamplificateurs 17.

De la même manière que précédemment, on ferme alors en séquence et deux par deux les interrupteurs TSW2 de manière à appliquer des pics de courant $I'_1$ à $I'_{12}$ aux douze voies sismiques. Les impulsions $I'_1$ et $I'_7$ sont simultanées. Il en est de même des impulsions $I'_2$ et $I'_8$, $I'_3$ et $I'_9$, etc. Les réponses $V_1$ à $V_{12}$ des différentes voies sismiques sont appliquées deux à deux au multiplexeur principal 15 et au travers de la chaîne d'acquisition 22 à 25, sont transmises au système central en surface. Cette seconde étape dure un intervalle de temps $T_2$.

L'analyse des signaux de réponse ayant traversé les filtres passebande 18, permet de contrôler leurs fréquences de coupure et leurs pentes respectives.

Durant la troisième partie $T_3$ du cycle de test, les interrupteurs TSW1 et TSW3 des différents éléments 16 sont laissés dans le même état et, en l'absence de tout signal appliqué, on peut mesurer le bruit de fond électronique engendré par les différentes voies sismiques 17, 18 et la chaîne d'acquisition 22 à 25.

Les séquences de test sont effectuées avec une périodicité variable, par exemple à chaque profondeur où le dispositif de réception est immobilisé, avant d'effectuer un ou plusieurs cycles d'acquisition de données sismiques.

Le bloc d'alimentation électrique 21 comporte (Fig. 10) un dispositif d'alimentation du type à découpage connecté à la ligne $L_1$. La tension continue V appliquée sur cette ligne est transformée par un commutateur de découpage CD, un transformateur électrique 34, un pont redresseur 35 et des régulateurs de tensions 36 en deux tensions symétriques $V_+$ et $V_-$ pour l'alimentation des différents modules électroniques de l'appareil d'acquisition sismique.

Une ligne $I_6$ est connectée à la sortie du pont redresseur 35 d'une part et à une autre entrée XR3 du multiplexeur auxiliaire 19. La valeur $V_s$ disponible à la sortie du pont, est donc régulièrement transmise vers la surface.

De cette manière, on peut maintenir à une valeur optimale la tension continue non régulée. Cette tension est proportionnelle à la tension continue présente à l'extrémité de la ligne $L_1$. Selon le câble de transmission utilisé et sa longueur totale, les pertes en ligne peuvent être plus ou moins importantes.

En augmentant la tension électrique appliquée sur la ligne $L_1$ depuis le système central de commande, on peut rétablir une valeur $V_s$ convenable si les pertes en ligne sont trop fortes.

Si la tension $V_s$ au contraire est trop importante, les régulateurs de tension 36 doivent dissiper une plus grande énergie en chaleur, ce qui est d'autant plus gênant que les sondes de puits opèrent souvent à grande profondeur où la température ambiante est très élevée.

L'opérateur en surface peut donc veiller aussi à maintenir $V_s$ à une valeur pas trop élevée en baissant éventuellement la tension continue appliquée sur la ligne $L_1$, au cas où les pertes ohmiques dans le câble sont moins importantes.

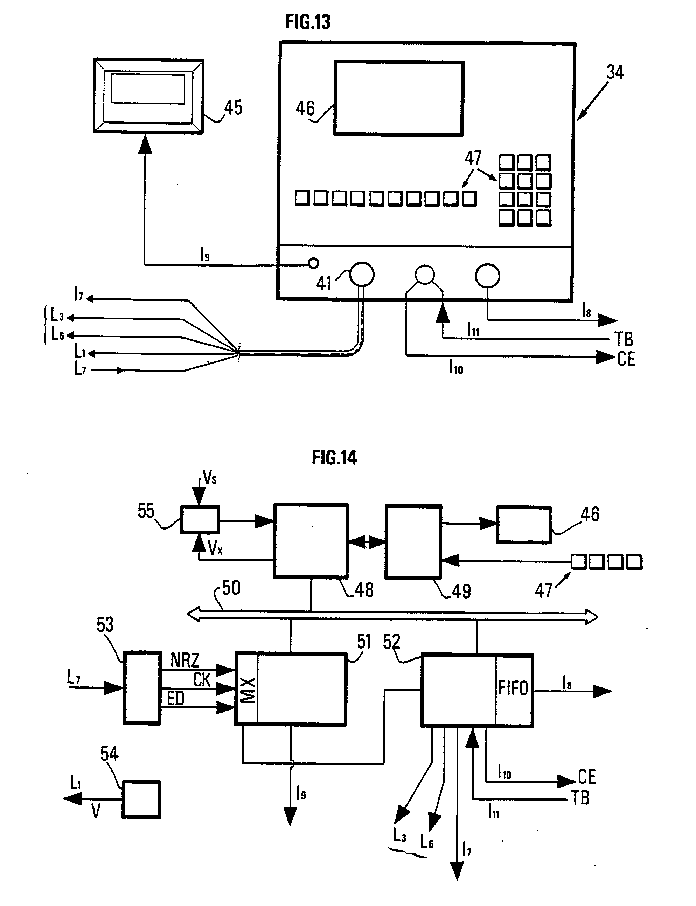

Le système central de commande et d'enregistrement disposé en surface à l'autre extrémité du câble de transmission 2 (Fig. 1) comporte (Fig. 11) une unité de commande 37, une unité de traitement de signaux 38 permettant la commande et la visualisation de différentes séquences fonctionnelles et une unité d'enregistrement de données sismiques 39.

L'unité de commande 37 comporte (Fig. 12) un générateur de puissance 40 connecté par l'intermédiaire d'un ampèremètre 41 à la ligne $L_2$ d'alimentation du moteur et des électro-vannes dans les différentes sondes. A la ligne $L_4$ est appliquée, suivant la position d'un commutateur 42, soit une tension positive $V_{cc}$ qui, en déclenchant le relais $R_1$ (Fig. 6), permet l'application de la puissance électrique aux sondes auxiliaires 8, soit une tension négative appliquée au moyen d'une ligne $I_7$, par l'unité de traitement de signaux 38, cette tension négative déclenchant le relais $R_2$ (Fig. 6) lorsqu'il s'agit de procéder à des tests.

Un élément d'adaptation 43 reçoit en permanence les signaux de mesure de la pression hydraulique transitant par la ligne $L_5$ et les applique à un manomètre 44.

L'unité de commande 37 a pour fonction la commande de l'ancrage des bras de la sonde principale, le déclenchement de ceux des sondes satellites et la visualisation des tensions d'alimentation et des pressions hydrauliques.

Les lignes $L_1$, $L_3$, $L_6$, $L_7$ sont raccordées directement, au travers de l'unité de commande 37, à une borne 41 de l'unité de traitement 38. Il en est de même de la ligne l₇ issue de l'unité de commande.

Deux lignes l₈, l₉ connectent l'unité de traitement 38 respectivement avec l'unité d'enregistrement 39 (Fig. 11) et avec un oscilloscope 45. Une ligne l₁₀ permet de transmettre à un boitier de commande de "tir" (non représenté) un signal CE de déclenchement. Par une autre ligne l₁₁, l'unité de traitement 38 reçoit du même boitier le signal TB marquant l'instant effectif du déclenchement de la source sismique. Un écran 46 (Fig. 13) permet d'afficher les séquences de test, de contrôle, ou d'acquisition sismique en cours. Différents programmes peuvent être sélectionnés au moyen de deux claviers 47.

Sur le schéma synoptique de la figure 14, on voit que l'unité de traitement 38 comporte un microprocesseur 48 communiquant par l'intermédiaire d'un élément d'interface 49, avec l'écran de contrôle 46 et avec les claviers 47 et, par l'intermédiaire d'un "bus" 50, avec un ensemble d'acquisition 51 et un ensemble d'interface 52.

L'ensemble d'acquisition 51 est connecté à la ligne L₇ de transmission des données, par l'intermédiaire d'un module de réception 53. Celui-ci est adapté, d'une part à remettre en forme les signaux codès arrivant par la ligne L₇ et, d'autre part à les décoder et les contrôler.

Des signaux transmis sont extraits, les signaux de données NRZ, un signal d'horloge CK qui a étè utilisè dans l'appareil d'acquisition de la sonde principale pour synchroniser la transmission, et des signaux ED indiquant éventuellement que des erreurs de transmission ont été détectées. Les différents signaux extraits sont appliqués à l'ensemble d'acquisition 51 qui comportent des moyens pour reconstituer sous une forme parallèle les "mots" numériques reçus sous une forme sérielle, un convertisseur numérique-analogique et une mémoire-tampon (ces différents éléments ne sont pas représentés).

L'ensemble d'acquisition transmet en temps réel les signaux des douze capteurs reconvertis sous forme analogique à l'oscilloscope 45 (Fig. 13) par la ligne l₉. Le microprocesseur 48 vient lire la mèmoire-tampon et transmet son contenu à l'ensemble d'interface 49 qui adapte le format des mots numériques avant de les stocker dans des mémoires-tampons du type FIFO et de les transférer à l'unité d'enregistrement 39 par l'intermédiaire de la ligne l₈. De cet ensemble d'interface 52, partent les lignes L₃, L₆, l₇, l₁₀ et l₁₁.

L'unité de traitement 38 comporte encore un boitier d'alimentation 54 délivrant la tension électrique V sur la ligne L₁ pour l'alimentation des modules électroniques dans les sondes.

Une des particularités du système selon l'invention tient à l'utilisation de l'ensemble du dispositif d'acquisition pour le contrôle de l'ensemble de sondes durant leur descente dans le forage.

Les capteurs G₁ à G₁₂ qui réagissent aux vibrations et aux secousses importantes auxquelles les sondes sont soumises pendant la descente, engendrent des signaux d'amplitude beaucoup plus grande que celle des signaux reçus dans les périodes d'acquisition sismique. Dans ces conditions, toute diminution importante des signaux engendrés par un ou plusieurs capteurs et notamment par ceux contenus dans la sonde satellite la plus profonde, est donc significatif d'une irrégularité de la progression.

En surveillant l'amplitude des différents signaux délivrés par les capteurs, l'opérateur peut donc savoir si la sonde la plus basse (et éventuellement celles qui la suivent) est freinée ou immobilisée.

Un cycle d'acquisition est donc effectué durant la descente à des intervalles de temps déterminés, toutes les secondes par exemple, et les tensions V$_x$ transmises par les différents capteurs sont comparées à une tension-seuil. Cette opération est effectuée par exemple par un comparateur de tension 55 connecté au microprocesseur 48.

Si une ou plusieurs tensions descendent au-dessous du seuil, l'unité de traitement 34 indique alors sur son écran 43 (Fig. 13) le numéro du capteur correspondant et donc la sonde où se produit une irrégularité, et prévient l'opérateur par un signal sonore.

## Revendications

1. Dispositif pour l'acquisition de données sismiques dans un forage et leur transmission à un système central de commande et d'enregistrement (37, 39) disposé hors du forage, comportant un ensemble de réception pourvu d'une pluralité de capteurs sismiques (G₁-G₁₂) disposés dans au moins une sonde (3) descendue dans le forage à l'extrémité d'un câble (2) à plusieurs lignes de transmission (L₁ à L₇), ladite sonde (3) comportant des bras d'ancrage (6) associés à des moyens de pression hydrauliques commandés depuis le système central et un appareil d'acquisition (17, 18, 22, 25) adapté à collecter les signaux reçus par les différents capteurs et à les transmettre au système central par des lignes de transmission du câble sous la forme de série d'échantillons de signaux multiplexés et numérisés, par des lignes de transmission dudit câble, caractérisé en ce qu'il comporte un ensemble de contrôle avec une première partie (27, H) dans la sonde incluant des moyens de multiplexage (15, 19) pour connecter par intermittence les capteurs avec l'appareil d'acquisition, et une deuxième partie (34, 43) dans le système central de commande et d'enregistrement pour tester les signaux des capteurs sismiques durant la descente de la sonde (3) et détecter les signaux de niveau faible indicatifs d'une irrégularité de la progression de ladite sonde.

2. Dispositif selon la revendication 1, caractérisé en ce que l'ensemble de contrôle est également pourvu de moyens (A) pour déterminer la position des bras d'ancrage.

3. Dispositif selon la revendication 1, caractérisé en ce que l'ensemble de contrôle comporte en outre des moyens (16, 30) pour tester les différents capteurs et l'appareil d'acquisition.

4. Dispositif selon la revendication 1, caractérisé en ce que le système central de commande et d'enregistrement (37-39) comporte une unité de traitement (38) pour la gestion des signaux échangés par les lignes ($L_1$-$L_7$) dudit câble, ladite unité de traitement comportant des moyens de comparaison (55) pour la détection des signaux reçus par le système central et provenant desdits capteurs dont l'amplitude devient inférieure à une valeur-seuil prédéterminée.

5. Dispositif selon la revendication 2, caractérisé en ce que les moyens (A) pour déterminer la position des bras d'ancrage comportent un diviseur de tension électrique comportant un réseau de résistances ($R_1$, $R_2$, $RS_1$...) associés à au moins un interrupteur ($C_1$) déclenché par l'ouverture des bras d'ancrage, la tension fournie par le diviseur étant appliquée à l'appareil d'acquisition.

6. Dispositif selon la revendication 3, caractérisé en ce que l'appareil d'acquisition (17, 18, 22-25) comporte des moyens d'amplification et de filtrage (17, 18) connectés aux différents capteurs ($G_1$-$G_{12}$) et en ce que les moyens (16, 30) pour tester les différents capteurs et l'appareil d'acquisition comportent des éléments de test (16) associés à un synchronisateur de test (30) pour appliquer par intermittence des signaux calibrés aux capteurs ($G_1$-$G_{12}$) et aux moyens d'amplification et de filtrage (17, 18), les signaux issus de cesderniers étant transmis par l'appareil d'acquisition au système central de commande et d'enregistrement, de manière à tester successivement l'appareil d'acquisition seul et combiné auxdits capteurs.

7. Dispositif selon l'une des revendications 1 à 3, caractérisé en ce que l'appareil d'acquisition comporte un bloc d'alimentation (21) alimenté depuis le système central par une ligne ($L_1$) du câble et en ce que l'ensemble de contrôle comporte une ligne ($I_6$) pour appliquer à l'appareil d'acquisition une tension électrique ($V_s$) prélevée dans le bloc d'alimentation.

8. Dispositif selon la revendication 6, caractérisé en ce que chaque élément de test (16) comporte un premier commutateur (TSW1) pour connecter par intermittence le capteur associé à l'entrée des moyens d'amplification et de filtrage et un second commutateur (TSW2) pour appliquer une tension calibrée à l'entrée des moyens d'amplification et de filtrage, et en ce que le synchronisateur de test (30) comporte des éléments logiques pour appliquer en séquence des impulsions de fermeture à des seconds commutateurs (TSW2) associés au moins à une série de capteurs différents pendant un premier intervalle de temps ($T_1$) de fermeture du premier commutateur (TSW1) associé à tous les capteurs de la série, et pour répéter une séquence d'impulsions de fermeture identique aux mêmes seconds commutateurs (TSW2) durant un second intervalle de temps ($T_2$) de manière à tester la réponse dudit appareil d'acquisition connecté aux capteurs de ladite série et déconnectés de ces mêmes capteurs, le système central de commande et d'enregistrement comportant des moyens (42) pour appliquer par intermittence à une ligne ($L_4$) dudit câble un ordre de validation de test pour ledit sychronisateur.

9. Dispositif selon l'une des revendications précédentes, caractérisé en ce que ledit ensemble de contrôle est connecté à une voie d'entrée au moins desdits moyens de multiplexage (15, 19).

10. Dispositif selon la revendication 1, caractérisé en ce que l'appareil d'acquisition comporte des ensembles d'amplification et de filtrage (17, 18) pour amplifier et filtrer les signaux délivrés par chacun des capteurs ($G_1$-$G_{12}$), une chaine d'acquisition sismique connectée auxdits ensembles (17, 18) par les moyens de multiplexage et comportant un amplificateur (22), un convertisseur analogique-numérique (23), des moyens de codage (24) des signaux numérisés et des moyens d'émission (25) des signaux codés sur une ligne ($L_7$) du câble de transmission, les moyens de multiplexage comportant au moins une entrée supplémentaire pour l'application de signaux délivrés par l'ensemble de contrôle à l'entrée de la chaine d'acquisition sismique.

11. Dispositif selon la revendication 10, caractérisé en ce que l'ensemble de contrôle comporte un diviseur de tension électrique ($R_1$, $R_2$, $R_{S1}$-$R_{S4}$) délivrant une tension dont la valeur dépend de la position des bras d'ancrage de chaque sonde, la tension issue du diviseur de tension étant appliquée à une entrée (XA1) des moyens de multiplexage (15, 19).

12. Dispositif selon la revendication 10, caractérisé en ce que l'appareil d'acquisition comporte un bloc d'alimentation (21) alimenté depuis le système central par une ligne ($L_1$) du câble de température (32), ce capteur et le bloc d'alimentation (21) étant connectés à deux voies d'entrée (XA2, XA3) des moyens de multiplexage (15, 19).

13. Dispositif selon la revendication 10, caractérisé en ce que le système central de commande et d'enregistrement comporte une unité de traitement (38) pour la gestion des signaux échangés par les lignes du câble de transmission, ladite unité de traitement étant adaptée à commander par intermittence les moyens de multiplexage et la chaine (22-25) d'acquisition de données sismiques durant la progression de l'ensemble de réception dans le forage, de manière à mesurer l'amplitude des signaux délivrés par les différents capteurs.

14. Dispositif selon la revendication 10, caractérisé en ce que les moyens de multiplexage comportent un multiplexeur principal (15) connecté aux ensembles d'amplification et de filtrage et un multiplexeur auxiliaire (19) dont la sortie est connectée à une entrée de multiplexeur principal, l'ensemble de contrôle dans la sonde étant connecté au multiplexeur auxiliaire.

15. Dispositif selon les revendications 8 et 10, caractérisé en ce que le synchronisateur de test (30) est adapté à appliquer une même impulsion de fermeture aux seconds commutateurs (TSW2) de deux éléments de test (15) différents.

**Patentansprüche**

1. Gerät zur bohrlochseismischen Erfassung von Daten und deren Übertragung an ein ausserhalb des Bohrlochs angeordnetes zentrales Steuer- und Aufzeichnungssystem (37, 39) mit einer Empfangsgruppe, die mit einer Vielzahl seismischer Empfänger ($G_1$-$G_{12}$) versehen ist, die in wenigstens einer Sonde (3) angeordnet sind, welche in das Bohrloch am Ende eines mit mehreren Transmissionsleitungen ($L_1$-$L_7$) ausgestatteten Kabels (2) herabgelassen wird, wobei die Sonde (3) Verankerungsarme (6) umfaßt, welche hydraulischen Druckeinrichtungen zugeordnet sind, die vom zentralen System aus gesteuert sind und einem Erfassungsgerät (17, 18, 22, 25), das so ausgebildet ist, um die von den verschiedenen Empfängern empfangenen Signale zu sammeln und sie auf die Zentraleinheit über Transmissionsleitungen des Kabels in Form einer Reihe von Probe(n)nahme Signalen in multiplexierter und digitalisierter Form durch Transmissionsleitungen dieses Kabels zu übertragen, dadurch gekennzeichnet, daß es eine Regelanordnung mit einem ersten Teil (27, H) in der Sonde einschliesslich der Multiplexiereinrichtungen (15, 19) umfaßt, um intermittierend die Empfänger mit dem Erfassungsgerät zu verbinden und einem zweiten Teil (34, 43) in der zentralen Steuer- und Aufzeichnungseinheit, um die Signale der seismischen Empfänger während des Absenkens der Sonde (3) zu testen und die Signale geringen Niveaus, die eine Unregelmässigkeit im Fortschritt der Sonde anzeigen, zu ermitteln.

2. Gerät nach Anspruch 1, dadurch gekennzeichnet, daß die Regelgruppe ebenfalls mit Mitteln (A) zur Bestimmung der Stellung der Verankerungsarme versehen ist.

3. Gerät nach Anspruch 1, dadurch gekennzeichnet, daß die Regelgruppe im übrigen Mittel (16, 30) zum Testen der verschiedenen Empfänger und des Erfassungsgerätes umfaßt.

4. Gerät nach Anspruch 1, dadurch gekennzeichnet, daß die zentrale Steuer- und Aufzeichnungseinheit (37-39) eine Verarbeitungseinheit (38) für das Führen der über die Leitungen ($L_1$-$L_7$) dieses Kabels ausgetauschten Signale umfaßt, wobei diese Verarbeitungseinheit Vergleichermittel (55) zum Ermitteln der von der zentralen Einheit empfangenen Signale umfaßt, die aus diesen Empfängern stammen, deren Amplitude kleiner als ein vorbestimmter Schwellenwert wird.

5. Gerät nach Anspruch 2, dadurch gekennzeichnet, daß die Mittel (A) zum Bestimmen der Stellung der Verankerungsarme einen elektrischen Spannungsteiler mit einem Netz aus Widerständen ($R_1$, $R_2$, $RS_1$...) umfassen, die wenigstens einem Unterbrecher ($C_1$) zugeordnet sind, der durch das Öffnen der Verankerungsarme ausgelöst wird, wobei die vom Spannungsteiler gelieferte Spannung an das Erfassungsgerät gelegt wird.

6. Gerät nach Anspruch 3, dadurch gekennzeichnet, daß das Erfassungsgerät (17, 18, 22-25) Mittel zum Vestärken und Filtrieren (17, 18) umfaßt, die mit den verschiedenen Empfängern ($G_1$-$G_{12}$) verbunden sind und daß die Mittel (16, 30) zum Testen der verschiedenen Empfänger und des Erfassungsgerätes Testelemente (16) umfassen, die einem Testsynchronisator (30) zugeordnet sind, um intermittierend kalibrierte Signale an die Empfänger ($G_1$-$G_{12}$) und an die Verstärker- und Filtermittel (17, 18) zu legen, wobei die aus diesen letzteren stammenden Signale durch das Erfassungsgerät auf die zentrale Steuer- und Aufzeichnungseinheit übertragen werden, derart, daß nacheinander das Erfassungsgerät allein und kombiniert mit diesen Empfängern getestet wird.

7. Gerät nach einem der Ansprüche 1 bis 3, dadurch gekennzeichnet, daß das Erfassungsgerät einen Speiseblock (21) umfaßt, der von der Zentraleinheit über eine Leitung ($L_1$) des Kabels gespeist ist und daß die Regelgruppe eine Leitung ($I_6$) umfaßt, um an das Erfassungsgerät eine elektrische Spannung ($V_S$), die im Speiseblock entnommen wurde, zu legen.

8. Gerät nach Anspruch 6, dadurch gekennzeichnet, daß jedes Testelement (16) einen ersten Umschalter (TSW1) umfaßt, um intermittierend den zugeordneten Empfänger an den Eingang der Verstärker- und Filtereinrichtungen zu legen und einen zweiten Umschalter (TSW2) aufweist, um eine kalibrierte Spannung an den Eingang der Verstärkerund Filtermittel zu legen, und daß der Testsynchronisator (30) logische Elemente umfaßt, um sequentiell Schließimpulse an zweite Umschalter (TSW2) zu legen, die wenigstens einer Reihe unterschiedlicher Empfänger während eines ersten Schließzeitintervalls ($T_1$) des ersten sämtlichen Empfängern der Reihe zugeordneten ersten Umschalters (TSW1) zu legen und um eine Sequenz von Schließimpulsen identisch diesen gleichen zweiten Umschaltern (TSW2) während eines zweiten Zeitintervalls ($T_2$) zu wiederholen, derart, daß die Antwort des mit den Empfängern dieser Reihe verbundenen Erfassungsgerätes, die mit diesen gleichen Empfängern nicht verbunden sind getestet wird, wobei die zentrale Steuer- und Aufzeichnungseinheit Mittel (42) umfaßt, um intermittierend an eine Leitung ($L_4$) dieses Kabels einen Testvalidierungs- bzw. Gültigmachungsbefehl für diesen Synchronisator zu legen.

9. Gerät nach einem der vorhergehenden Ansprüche, dadurch gekennzeichnet, daß diese Regelgruppe mit einem Eingangsweg wenigstens dieser Multiplexiermittel (15, 19) verbunden ist.

10. Gerät nach Anspruch 1, dadurch gekennzeichnet, daß das Erfassungsgerät Vestärker und Filtergruppen (17, 18) umfaßt, um die durch jeden der Empfänger ($G_1$-$G_{12}$) gelieferten Signale zu verstärken und zu filtern, eine seismische mit diesen Gruppen (17, 18) über die Multiplexiermittel und mit einem Verstärker (22) verbundene seismische Erfassungskette, einem Analog-Digitalwandler (23), Codiermitteln (24) der digitalisierten Signale und Emissionsmitteln (25) der codierten Signale auf einer Leitung ($L_7$) des Transmissionskabels, wobei die Multiplexiermittel wenigstens einen zusätzlichen Eingang zum Anlegen von Signalen umfassen, die von der Regelgruppe an den Eingang der seismischen Erfassungskette geliefert wurde.

11. Gerät nach Anspruch 10, dadurch gekennzeichnet, daß die Regelgruppe einen elektrischen

Spannungsteiler (R$_1$, R$_2$, R$_{S1}$-R$_{S4}$) umfaßt, der eine Spannung liefert, deren Wert abhängt von der Stellung der Verankerungsarme jeder Sonde, wobei die aus dem Spannungsteiler stammende Spannung an einen Eingang (XA1) der Multiplexiermittel (15, 19) gelegt ist.

12. Gerät nach Anspruch 10, dadurch gekennzeichnet, daß das Erfassungsgerät einen Speiseblock (21) umfaßt, der von der Zentraleinheit aus über eine Leitung (L$_1$) des Temperaturkabels (32) gespeist ist, wobei dieser Empfänger und der Speiseblock (21) mit zwei Eingangswegen (XA2, XA3) der Multiplexiermittel (15, 19) verbunden sind.

13. Gerät nach Anspruch 10, dadurch gekennzeichnet, daß die zentrale Steuer- und Aufzeichnungseinheit eine Verarbeitungseinheit (38) für das Führen der über die Leitungen des Transmissionskabels ausgetauschten Signale umfaßt, wobei diese Verarbeitungseinheit so ausgelegt ist, daß sie intermittierend die Multiplexiermittel und die Erfassungskette (22-25) für die seismischen Daten während des Fortschritts der Empfängeranordnung in der Bohrung derart steuert, daß die Amplitude der durch die verschiedenen Empfänger gelieferten Signale gemessen wird.

14. Gerät nach Anspruch 10, dadurch gekennzeichnet, daß die Multiplexiermittel einen Hauptmultiplexer (15) umfassen, der mit den Verstärker- und Filtergruppen verbunden ist und einen Hilfsmultiplexer (19) aufweisen, dessen Ausgang mit einem Eingang des Hauptmultiplexers verbunden ist, wobei die Regelgruppe in der Sonde mit dem Hilfsmultiplexer verbunden ist.

15. Gerät nach einem der Ansprüche 8 und 10, dadurch gekennzeichnet, daß der Testsynchronisator (30) so ausgelegt ist, daß er ein und den gleichen Schließimpuls an die zweiten Umschalter (TSW2) von zwei unterschiedlichen Testelementen (15) legt.

**Claims**

1. A device for the acquisition of seismic data in a borehole and their transmission to a central control and recording system (37, 39) disposed outside the borehole, comprising a reception assembly having a plurality of seismic sensors (G$_1$-G$_{12}$) disposed in at least one probe (3) lowered into the borehole at the end of a cable (2) having several transmission lines (L$_1$ to L$_7$), the said probe (3) comprising anchoring arms (6) associated with hydraulic pressure means controlled from the central system and an acquisition apparatus (17, 18, 22, 25) suitable for collecting the signals received by the different sensors and transmitting them through transmission lines of the cable to the central system in the form of a series of samples of multiplexed and digitised signals, through transmission lines of the said cable, characterised in that it comprises a control assembly with a first part (27, H) in the probe including multiplexing means (15, 19) for intermittently connecting the sensors to the acquisition apparatus, and a second part (34, 43) in the central control and recording system for testing the seismic sensor signals during the descent of the probe (3) and detecting the low level signals indicating an irregularity in the advance of the said probe.

2. A device according to claim 1, characterised in that the control assembly is also provided with means (A) for determining the position of the anchoring arms.

3. A device according to claim 1, characterised in that the control assembly in addition incorporates means (16, 30) for testing the different sensors and the acquisition apparatus.

4. A device according to claim 1, characterised in that the central control and recording system (37-39) incorporates a processing unit (38) for managing the signals exchanged over the lines (L$_1$-L$_7$) of the said cable, the said processing unit incorporating comparison means (55) for detecting the signals received by the central system and coming from the said sensors whose amplitude becomes less than a predetermined threshold value.

5. A device according to claim 2, characterised in that the means (A) for determining the position of the anchoring arms comprise an electrical voltage divider having a resistor network (R$_1$, R$_2$, RS1 ...) associated with at least one switch (C$_1$) triggered by the opening of the anchoring arms, the voltage supplied by the divider being applied to the acquisition apparatus.

6. A device according to claim 3, characterised in that the acquisition apparatus (17, 18, 22-25) comprises amplification and filtering means (17, 18) connected to the different sensors (G$_1$-G$_{12}$) and in that the means (16, 30) for testing the different sensors and the acquisition apparatus comprise test elements (16) associated with a test synchroniser (30) for intermittently applying calibrated signals to the sensors (G$_1$-G$_{12}$) and to the amplification and filtering means (17, 18), the signals coming from the latter being transmitted by the acquisition apparatus to the central control and recording system so as to successively test the acquisition apparatus alone and combined with the said sensors.

7. A device according to one of claims 1 to 3, characterised in that the acquisition apparatus comprises a power supply unit (21) fed from the central system over a line (L$_1$) of the cable and in that the control assembly comprises a line (I$_6$) for applying to the acquisition apparatus an electrical voltage (V$_S$) taken from the power supply unit.

8. A device according to claim 6, characterised in that each test element (16) incorporates a first switch (TSW1) for intermittently connecting the associated sensor to the input of the amplification and filtering means and a second switch (TSW2) for applying a calibrated voltage to the input of the amplification and filtering means, and in that the test synchroniser (30) comprises logic elements for sequentially applying closure pulses to second switches (TSW2) associated with at least one series of different sensors during a first time interval (T$_1$) of closure of the first switch (TSW1) associated with all the sensors of the series, and for repeating an identical sequence of closure pulses to the same second switches (TSW2) during a second time interval ($T_2$) so as to test the response of the said acquisition apparatus connected to the sensors of the said series and disconnected from these same sensors, the central control and recording system incorporating means (42) for intermittently applying to a line ($L_4$) of the said cable a test enable command for the said synchroniser.

9. A device according to one of the preceding claims, characterised in that the said control assembly is connected to at least one input channel of the said multiplexing means (15, 19).

10. A device according to claim 1, characterised in that the acquisition apparatus comprises amplification and filtering assemblies (17, 18) for amplifying and filtering the signals delivered by each of the sensors ($G_1$-$G_{12}$), a seismic acquisition chain connected to the said assemblies (17, 18) by the multiplexing means and comprising an amplifier (22), an analog-digital converter (23), means (24) for coding the digitised signals and means (25) for transmitting the coded signals over a line ($L_7$) of the transmission cable, the multiplexing means incorporating at least one additional input for applying signals delivered by the control assembly to the input of the seismic acquisition chain.

11. A device according to claim 10, characterised in that the control assembly comprises an electrical voltage divider ($R_1$, $R_2$, $R_{S1}$-$R_{S4}$) delivering a voltage whose value depends on the position of the anchoring arms of each probe, the voltage coming from the voltage divider being applied to an input (XA1) of the multiplexing means (15, 19).

12. A device according to claim 10, characterised in that the acquisition apparatus incorporates a power supply unit (21) fed from the central system over a line ($L_1$) of the temperature cable (32), this sensor and the power supply unit (21) being connected to two input channels (XA2, XA3) of the multiplexing means (15, 19).

13. A device according to claim 10, characterised in that the central control and recording system incorporates a processing unit (38) for managing the signals exchanged by the lines of the transmission cable, the said processing unit being suitable for intermittently controlling the multiplexing means and the seismic data acquisition chain (22-25) during the advance of the reception assembly into the borehole, so as to measure the amplitude of the signals delivered by the different sensors.

14. A device according to claim 10, characterised in that the multiplexing means comprise a main multiplexer (15) connected to the amplification and filtering assemblies and an auxiliary multiplexer (19), the output of which is connected to an input of the main multiplexer, the control assembly in the probe being connected to the auxiliary multiplexer.

15. A device according to claims 8 and 10, characterised in that the test synchroniser (30) is suitable for applying the same closure pulse to the second switches (TSW2) of two different test elements (15).

**FIG.1**

11    12    13    14

2

1

2

3

10

8

10

8

9

**FIG.3**

L1    L2

L6    L7    L3

L5    L4

**FIG.2**

7

3

5

6

4

**FIG.4**

**FIG.5**

**FIG.6**

**FIG.7**

**FIG.8**

**FIG.9**

**FIG.10**

**FIG.11**

**FIG.12**

**FIG.13**

**FIG.14**